# EUROPEAN PATENT SPECIFICATION

(11) **EP 2 436 583 B1**
(45) Date of publication and mention of the grant of the patent: **14.12.2016**
(21) Application number: 11182658.2
(22) Date of filing: 26.09.2011
(51) Int. Cl.: B62J 17/02

(54) **Fairing structure for straddle-ride type vehicle**
Verkleidungsstruktur für ein Sattelfahrzeug
Structure de carénage pour véhicule à monture de selle

(30) Priority: 29.09.2010 JP 2010219605
(43) Date of publication of application: 04.04.2012
(73) Proprietor: Honda Motor Co., Ltd., Tokyo 107-8556 (JP)
(72) Inventor: Miyamoto, Shiro, Saitama, 351-0193 (JP); Omae, Akira, Saitama, 351-0193 (JP); Tanaka, Masatsugu, Saitama, 351-0193 (JP); Teofilo, Plaza Garcia, 00143 Roma (IT)
(74) Representative: Beder, Jens

(56) References cited:
- EP-A1- 0 462 511
- EP-A1- 2 042 415
- US-A1- 2006 219 450
- TONY HOARE: "Ducati Multistrada First Ride", BIKE, vol. 4605, no. 445, April 2010 (2010-04), pages 28-34, London, UK

## Description

The present invention relates to an improvement in a fairing structure for a straddle-ride type vehicle.

There is known a faring structure for a straddle-ride type vehicle that extends vehicle-rearward from a headlight to lead the running-air hitting the front of the vehicle toward the rear of the vehicle smoothly (see e.g. patent document 1 (a left lateral view, an embodiment reference view)).

As illustrated in the left lateral view of Japanese Design Registration No. 1332655, a front side cowl for a motorcycle is a generally V-shaped member composed of a beaked portion, an obliquely upwardly extending portion and an obliquely downwardly extending portion. The beaked portion is provided at a front end portion and shaped like a beak. The obliquely upwardly extending portion extends obliquely rearwardly and upwardly from the beaked portion. The obliquely downwardly extending portion extends obliquely rearwardly and downwardly from the beaked portion. The obliquely upward extending portion bends on the back of the drawing as it goes rearwardly and upwardly from the beaked portion. The obliquely downward extending portion bends on the back of the drawing as it goes rearward and downwardly from the beaked portion. The front surface of the front side cowl has a smooth surface.

As illustrated in the embodiment reference view of patent document 1, the front side cowl for a motorcycle is mounted to the lateral portion of a fuel tank in such a manner that the beaked portion is located below a headlight and the obliquely upwardly extending portion is located at the lateral portion of the fuel tank.

In An article in BIKE magazine by Tony Hoare entitled "Ducati Multistrada First Ride", (BIKE, vol. 4605, no. 445, April 2010 (2010-04), pages 28-34, London, UK) discloses a fairing structure for a straddle-ride type vehicle according to the preamble of claim 1.

In the structure of the conventional example, the upward extending portion and the downward extending portion rearward of the beaked portion are formed in the general-V shape. Therefore, when the vehicle body is to be banked for turning, the wind laterally hits the generally-V-shaped portion of the cowl. Therefore, the wind is likely to remain therein. Thus, the banking is liable to be heavy.

During the traveling of the vehicle, a portion of running-air passing by the side of the beaked portion is led along the obliquely upward extending portion and the obliquely downward extending portion each having a smooth surface. Since the surface of the obliquely upward extending portion and of the obliquely downward extending portion is formed smoothly, the turbulence of the running-air is hard to occur. Since the turbulence of running-air is hard to occur, straight traveling performance is improved.

On the other hand, when turning the vehicle, the rider needs to apply a slightly large force to the vehicle.

Accordingly, a fairing structure for a straddle-ride type vehicle is desired in which during the turning of the vehicle, the direction of the vehicle can be changed by a small force to make maneuverability light.

It is an object of the present invention to provide a fairing structure for a straddle-ride type vehicle in which during the turning of the vehicle, the direction of the vehicle can be changed by a smaller force to make maneuverability light.

The present invention according to claim 1 is characterized in that in a fairing structure for a straddle-ride type vehicle, including: a headlight disposed in front of a body frame; and side covers disposed rearward of the headlight and laterally of the body frame, in which the side covers include respective main body portions, and respective beaked portions disposed to extend vehicle-forward from the respective main body portions and to extend around the front downside of the headlight and a vehicle-widthwise center, and each shaped like a beak as viewed from the side of the vehicle, upper side cowls are installed above the respective beaked portions and rearward of the headlight, and a doglegged portion shaped like a dogleg in section along a height direction is formed between a lower portion of the upper side cowl and an upper portion of the beaked portion and a doglegged portion shaped like a dogleg in section along a height direction is formed between a lower portion of the upper side cowl and an upper portion of the beaked portion, and the upper side cowls are each provided with a respective window portion opening laterally of the vehicle and direction indicators which project outwardly in the vehicle-width direction are attached to corresponding respective lateral surfaces of the upper side cowls.

The invention according to claim 2 is characterized in that each of respective rear portions of the upper side cowls rolls back vehicle-widthwise outwardly as each of the respective rear portions of the upper side cowls goes rearward of and above of the vehicle.

The invention according to claim 3 is characterized in that a screen is installed above the headlight, the screen including a main screen portion having a surface facing in the longitudinal direction of the vehicle, and left and right sub-screen portions extending leftward and rightward, respectively, of the main screen and each having a surface facing in the vehicle-width direction, and the left and right sub-screen portions are arranged generally parallel to the respective upper side cowls.

The invention according to claim 4 is characterized in that the left and right sub-screen portions are co-fastened to corresponding respective attachment portions of the direction indicators.

The invention according to claim 5 is characterized in that the side covers are provided with respective recessed portions, and the left and right sub-screen portions are provided with respective claw portions inserted into the corresponding recessed portions.

In the invention according to claim 1, the upper side cowls are provided with the respective window portions. A portion of running-air flowing in the doglegged portion formed between the upper side cowl and the beaked portion along the height-direction passes through the window portion and flows into the inside of the vehicle. During turning, when the vehicle body is banked, the wind hits the upper side cowl from the lateral direction. The lateral wind is led into the window, thereby flowing into the inside of the vehicle. Thus, the banking of the vehicle body can be made light.

In the past, the doglegged portion formed between the upper side cowl and the beaked portion has not been formed with the window portion. In such a case, the running-air having a high flow rate flows along the doglegged portion. The running-air flowing in the doglegged portion smoothly flows rearward of the doglegged portion without occurrence of turbulence during the straight traveling of the vehicle. Since the turbulence of the running-air does not occur, the straight traveling performance of the vehicle is improved. On the other hand, running-air flows along the doglegged portion; therefore, a slightly large force is needed to turn the vehicle.

On that point, in the present invention, the widow portion is provided in the upper side cowl so that a portion of the running-air flowing along the doglegged portion is allowed to flow into the window portion. A portion of the running-air becomes turbulent in the vicinity of the window portion. Because of this turbulence, the direction of the vehicle can be changed by a smaller force during the turning. Thus, the maneuverability during the turning can be made light.

Furthermore, the direction indicators, which project outwardly in the vehicle-width direction, are attached to the corresponding respective lateral surfaces of the upper side cowls. The flow of the running-air flowing along the external lateral surface formed like a dogleg is made further turbulent by the direction indicator. Thus, the maneuverability of the vehicle during turning can be made further light.
In the invention according to claim 2, the rear portion of the upper side cowl rolls back outwardly in the vehicle-width direction. Since the rear portion of the upper side cowl rolls back outwardly in the vehicle-width direction, a portion of running-air flows so as to be led along the rear portion of the upper side cowl outwardly in the vehicle-width direction. Since a portion of running-air is allowed to flow toward the vehicle-widthwise side of the upper side cowl, the wind flowing toward the vehicle-widthwise side of the upper side cowl exhibits a windshield function. Thus, the amount of air hitting against a rider's side can be reduced.

In the invention according to claim 3, the left and right sub-screens extending leftward and rightward, respectively, of the main screen and having the surface facing in the vehicle-width direction are disposed generally parallel to the upper side cowls. Since the left and right sub-screens are disposed generally parallel to the upper side cowls, the running-air flowing from the side portion of the rider to the rider can be blocked. Consequently, the windshield effect for the rider can be further enhanced.

In the invention according to claim 4, the left and right sub-screens are co-fastened to the corresponding respective attachment portions of the sub-screens. Since the sub-screens are co-retained at the corresponding respective attachment portions of the sub-screens, the number of component parts can be reduced.

In the invention according to claim 5, the side covers are provided with the respective recessed portions and the left and right sub-screens are provided with the respective claw portions inserted into the respective recessed portions. The sub-screens can be attached to the respective side covers by means of the recessed portion and the claw portion. In this way, a simple structure composed of the recessed portion and the claw portion is provided. Therefore, the vibration occurring in the sub-screen can be suppressed without increasing the number of component parts.

Fig. 1 is a left lateral view of a motorcycle according to the present invention.
Fig. 2 is a lateral view of an essential portion in Fig. 1.
Fig. 3 is a front view of the motorcycle.
Fig. 4 is a cross-sectional view taken along line 4-4 in Fig. 2.
Fig. 5 is a cross-sectional view taken along line 5-5 in Fig. 2.
Fig. 6 is a cross-sectional view taken along line 6-6 in Fig. 2.
Fig. 7 is a cross-sectional view taken along line 7-7 in Fig. 2.
Fig. 8 is a view for assistance in explaining the operation in Fig. 3.
Fig. 9 is a view for assistance in explaining the operation in Fig. 2.
Fig. 10 includes a view for assistance in explaining the operation in Fig. 4 and a view for assistance in explaining the operation of a comparative example.
Fig. 11 illustrates another embodiment different from that in Fig. 2.
Fig. 12 is a cross-sectional view taken along line 12-12 in Fig. 11.
Fig. 13 is a cross-sectional view taken along line 13-13 in Fig. 11.

Embodiments of the present invention will hereinafter be described in detail with reference to the drawings. In the drawings and the embodiments, "upper," "downside or lower," "front," "back or rear," "left" and "right" denote respective directions a rider mounting on a motorcycle looks. It is to be noted that the drawings shall be viewed based on the directions of reference numerals.

A first embodiment of the present invention will first be described with reference to the drawings.

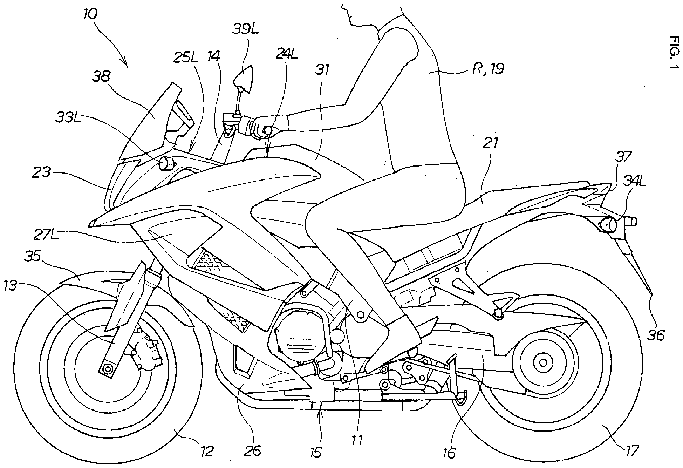

As illustrated in Fig. 1, a motorcycle 10 includes, as main elements, a body frame 11, a fork member 13, a handlebar 14, an engine 15, a swing arm 16, and a rear wheel 17. The fork member 13 is installed in a front portion of the body frame 11 and steerably supports a front wheel 12. The handlebar 14 is mounted to the fork member 13 and gripped by a rider R to make the vehicle steerable. The engine 15 is suspended by the body frame 11. The swing arm 16 extends from the body frame 11 toward the rear of the vehicle. The rear wheel 17 is attached to the rear end portion of the swing arm 16 and driven by the engine 15. A seat 21 on which occupants including the rider R sit is installed from the intermediate portion to rear portion of a vehicle body. The motorcycle 10 is a straddle-ride type vehicle configured such that the occupant 19 straddles the seat 21 for riding.

A description is next given of a headlight, cover members, etc., covering the outside of the vehicle.

In the motorcycle 10, the headlight 23 is disposed in front of the body frame 11. Left and right side covers 24L, 24R (only reference numeral 24L on the front side in the figure is denoted) are disposed at positions rearward of the headlight 23 and laterally of the body frame 11. Left and right upper side cowls 25L, 25R (only reference numeral 25L on the front side in the figure is shown) are disposed continuously with the corresponding respective upper portions of the left and right side covers 24L, 24R.

Left and right lower side covers 27L, 27R (only reference numeral 27L on the front side in the figure is shown) are disposed below the left and side covers 24L, 24R, respectively. An under cover 26 is disposed below the left and right lower side cover 27L, 27R.

A fuel tank 31 is installed vehicle-widthwise inward of the left and right side covers 24L, 24R so as to be partially covered by the left and right side covers 24L, 24R as viewed from the side of the vehicle. The fuel tank 31 is mounted to the body frame 11 at a position vehicle-rearward of the handlebar 14 provided at the leading end portion of the body frame 11.

Left and right front direction indicator 33L, 33R (only reference numeral 33L on the front side in the figure is shown) are attached to the left and right upper side cowls 25L, 25R, respectively, so as to project outwardly in the vehicle-width direction. Reference numeral 35 denotes a front fender.

A rear fender 36 is mounted above the rear wheel 17 and below the seat 21. A taillight 37 is attached to the rear portion of the rear fender 36. Left and right rear direction indicators 34L, 34R (only reference numeral 34L on the front side in the figure is shown) are attached to the rear fender 36 so as to project outwardly in the vehicle-width direction.

A screen 38 as a windshield is installed above the headlight 23.

Rearview mirrors 39L, 39R (only reference numeral 39L on the front side in the figure is shown) are installed on the handlebar 14.

A description is next given of the structure of the side cover and of the upper side cowl.

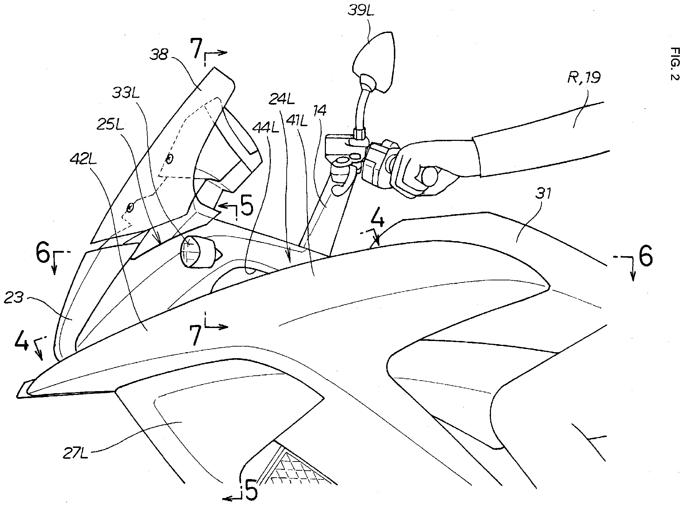

As illustrated in Fig. 2, the left side cover 24L is composed of a main body portion 41L and a beaked portion 42L extending vehicle-forwardly from the main body portion 41L and shaped like a beak as viewed from the side of the vehicle.

Similarly, the right side cover 24R, not shown, located on the back of the figure is composed of a main body portion 41R and a beaked portion 42R extending vehicle-forwardly from the main body portion 41R and shaped like a beak as viewed from the side of the vehicle.

The left upper side cowl 25L is disposed on the upper left of the beaked portion 42L. Similarly, the right upper side cowl 25R is disposed on the upper right of the beaked portion 42R. The left upper side cowl 25L is formed at a boundary position between the beaked portion 42L and the left upper side cowl 25L with a window portion 44L (only reference numeral 44L on the front side of the figure is shown) opening laterally of the vehicle. Similarly, the right upper side cowl 25R is formed at a boundary position between the beaked portion 42R and the right upper side cowl 25R with a window portion 44R opening laterally of the vehicle.

The headlight 23 is disposed vehicle-forward of the left and right upper side cowls 25L, 25R so as to be continuous with the left and right upper side cowls 25L, 25R. The beaked portions 42L, 42R are disposed below the head light 23. The upper side cowls 25L and 25R are disposed above the beaked portions 42L and 42R, respectively, and rearward of the headlight 23.

A description is next given of the shape of the beaked portion as viewed from the front of the vehicle.

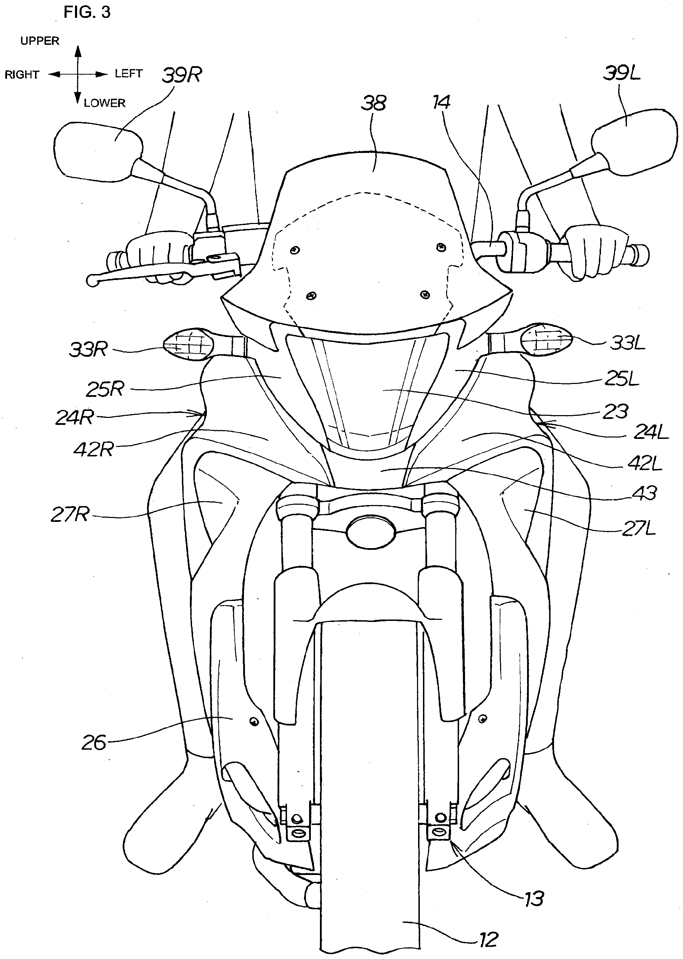

As illustrated in Fig. 3, the beaked portion 42L which is a constituent element of the side cover 24L is arranged to extend around the front downside of the headlight 23 and the vehicle-widthwise center. Similarly, the beaked portion 42R which is a constituent element of the side cover 24R is arranged to extend around the front downside of the headlight 23 and the vehicle-widthwise center.

The left and right upper side cowls 25L, 25R are provided above the left and right beaked portions 42L, 42R, respectively, so as to be continuous with the left and right beaked portions 42L, 42R, respectively. The headlight 23 is installed in the vehicle-widthwise inside of the left and right upper side cowls 25L, 25R in such a manner that its irradiation area faces the front of the vehicle. Incidentally, a front sensor cover 43 is installed between the respective end portions of the beaked portions 42L, 42R.

A description is next given of the left and right windows opened in the corresponding upper side cowls.

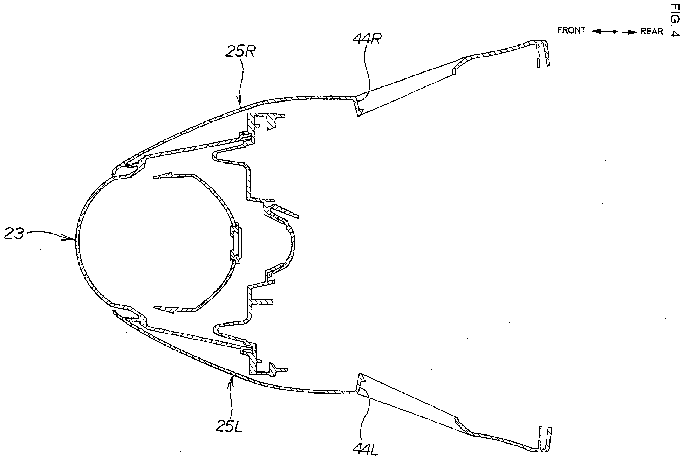

As illustrated in Fig. 4, the headlight 23 is provided at the front end of the vehicle. The left and right upper side cowls 25L, 25R extend from the headlight 23 smoothly continuously.

The left and right window portions 44L, 44R opening laterally of the vehicle are provided in the corresponding rear portions of the upper side cowls 25L, 25R, respectively.

A detailed description is next given of the window portion formed between the left upper side cowl and the left side cover and between the right upper side cowl and the right side cover.

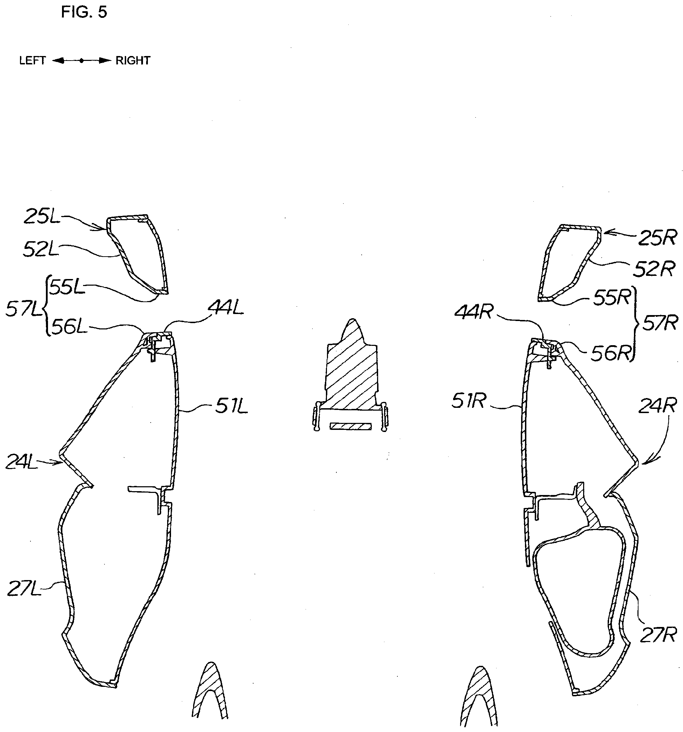

As illustrated in Fig. 5, the left upper side cowl 25L and the left side cover 24L are continuously mounted in this order to a left cowl inner 51L from the vehicle-widthwise outside and from above and below, respectively. Similarly, the right upper side cowl 25R and the right side cover 24R are continuously mounted in this order to a right cowl inner 51R from the vehicle-widthwise outside and from above and below, respectively.

The left and right upper side cowls 25L and 25R are formed with the left and right window portions 44L and 44R, respectively, opened. The left upper side cowl 25L is formed with a left rolling-back portion 52L at a position above the left window portion 44L. Similarly, the right upper side cowl 25R is formed with a right rolling-back portion 52R at a position above the right window portion 44R. Each of the left and rolling-back portions 52L, 52R rolls back vehicle-widthwise outwardly as it goes upward.

A description is next given of the fact that the left and right front direction indicators are attached to the respective left and right upper side cowls.

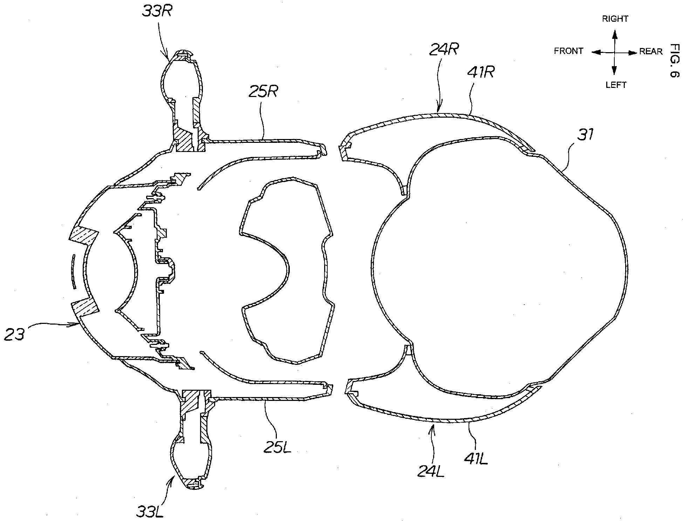

As illustrated in Fig. 6, the headlight 23 is installed at the front end portion of the vehicle. The left and right upper side cowls 25L, 25R are provided to extend vehicle-rearward in such a manner as to be smoothly continuous with the external surface of the headlight 23. The left and right side covers 24L, 24R are provided vehicle-rearward of the left and right upper side cowls 25L, 25R, respectively. The fuel tank 31 is installed between the left and right side covers 24L, 24R.

The left and right direction indicators 33L, 33R are attached to the left and right upper side cowls 25L, 25R, respectively.

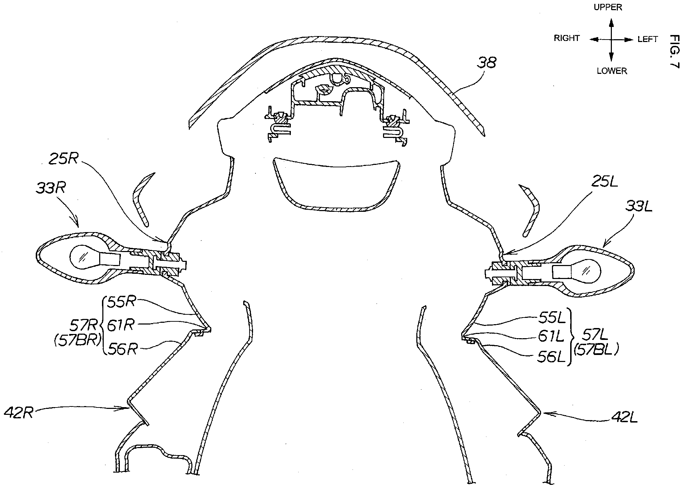

As illustrated in Fig. 7, the left doglegged portion 57L is formed between the lower portion 55L of the upper side cowl and the upper portion 56L of the beaked portion. Similarly, the right doglegged portion 57R is formed between the lower portion 55R of the upper side cowl and the upper portion 56L of the beaked portion. The left and right doglegged portions 57L, 57R include respective closing portions 61L, 61R which close inwardly in the vehicle-width direction and is shaped doglegged in cross-section along the height-direction. Running-air flows along each of the left and right doglegged portions 57L, 57R.

Returning to Fig. 5, the left doglegged portion 57L shaped like a dogleg in cross-section along the height direction is composed of the lower portion 55L of the upper side cowl and the upper portion 56L of the beaked portion so as to put the window portion 44L therebetween. Similarly, the right doglegged portion 57R shaped like a dogleg in cross-section along the height direction is composed of the lower portion 55R of the upper side cowl and the upper portion 56R of the beaked portion so as to put the window portion 44R therebetween. The left window portion 44L is located on the vehicle-widthwise inside of the left doglegged portion 57L. The right window portion 44R is located on the vehicle-widthwise inside of the right doglegged portion 57R.

A description is next given of the operation of the fairing structure of the straddle-ride type vehicle described above.

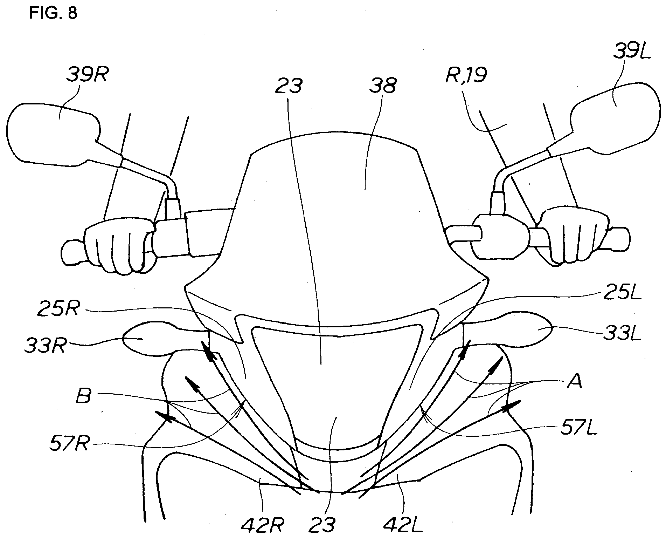

As illustrated in Fig. 8, the beaked portions 42L, 42R are arranged to extend around the front downside of the headlight 23 and the vehicle-widthwise center. The beaked portion 42L and the upper side cowl 25L form the left doglegged portion 57L dented vehicle-widthwise inwardly. Similarly, the beaked portion 42R and the upper side cowl 25R form the right doglegged portion 57R dented vehicle-widthwise inwardly. Running-air hitting the front end portion of the vehicle is partially led rearward of the vehicle along the left and right doglegged portions 57L, 57R as indicated with arrows A and B, respectively.

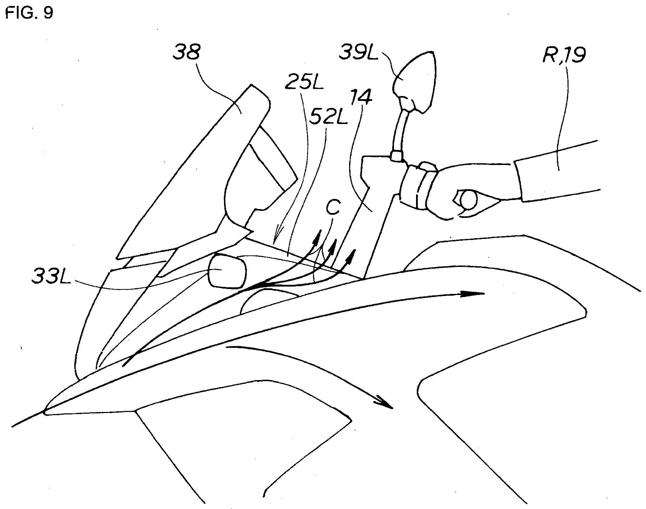

As illustrated in Fig. 9, a rolling-back portion 52L rolling back vehicle-widthwise outwardly is installed in the rear portion of the upper side cowl 25L. The rolling-back portion 52L allows running-air to be partially led outwardly in the vehicle-width direction, i.e., in a direction of arrow C, along the rear portion of the upper side cowl 25L. The running-air is partially allowed to flow vehicle-widthwise laterally of the upper side cowl 25L. Similarly, a rolling-back portion 52R rolling back vehicle-widthwise outwardly is installed in the rear portion of the upper side cowl 25R, not illustrated, on the right side in the vehicle-width direction. The rolling-back portion 52R allows running-air to be partially led vehicle-widthwise outwardly along the rear portion of the upper side cowl 25R. In addition, the running-air is partially allowed to flow vehicle-widthwise laterally of the upper side cowl 25R.

With the configuration described above, the air flowing vehicle-widthwise laterally of the upper side cowls 25L, 25R can exhibit a windshield function to reduce the amount of air hitting the side portions of the rider R.

With additional reference to Figs. 5 and 7, the running-air flowing along the doglegged portions 57L, 57R each formed like a dogleg can be made further turbulent by the left and right front direction indicators 33L, 33R, in addition to by the respective window portions 44L, 44R of the doglegged portions 57L, 57R. The left and right front direction indicators 33L, 33R are attached to the respective left and right upper side cowls 25L, 25R in the vicinity of the doglegged portions 57L, 57R so as to project vehicle-widthwise outwardly of the respective left and right upper side cowls 25L, 25R. In short, maneuverability during turning can be made further light by the doglegged portions 57L, 57R.

A description is next given of the operation in the case where the window portion is provided in the upper side cowl (the embodiment) and in the case where the window portion is not provided in the upper side cowl (a comparative example).

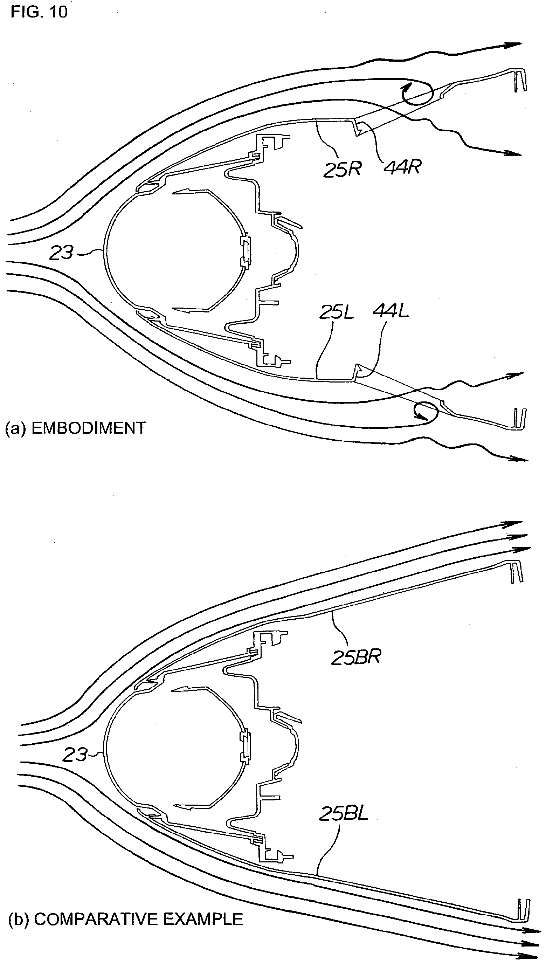

Fig. 10(a) illustrates the embodiment in which the left and right upper side cowls 25L, 25R are provided with the left and right window portions 44L, 44R, respectively. The running-air flowing in the left and right doglegged portions (reference numerals 57L, 57R in Fig. 7) formed along the height-direction by the left and right upper side cowls 25L, 25R and the corresponding left and right beaked portions 42L, 42R partially passes through the left and right window portions 44L, 44R and flows into the inside of the vehicle. During turning, when the vehicle body is banked, the wind hits the upper side cowls 25L, 25R from the lateral direction. This crosswind is led into the left and right window portions 44L, 44R, thereby flowing into the inside of the vehicle. Thus, the banking of the vehicle body can be made light.

Fig. 10(b) illustrates the comparative example. If the left and right upper side cowls are not provided with the left and right window portions, respectively, the running-air with a high flow rate flows along the left and right doglegged portions (reference numerals 57BL, 57BR in Fig. 7) smoothly flows toward the rearward of the vehicle without the occurrence of turbulence. During the turning of the vehicle, running-air with a high flow rate may flow along the lateral portions of the left and right upper side cowls 25BL, 25BR. In such a case, in order to turn the vehicle against the running-air with a high flow rate, a redundant force will be required.

Returning to Fig. 10(a), the left and right upper side cowls 25L, 25R are provided with the left and right window portions 44L, 44R, respectively. In addition, running-air flowing along the left and right doglegged portions 57L, 57R is made to partially flow into the corresponding left and right window portions 44L, 44R. The running-air flowing laterally of the left and right upper side cowls 25L, 25R becomes turbulent in the vicinity of the corresponding window portions 44L, 44R. If becoming turbulent, the running-air has a low flow rate. Therefore, during turning the direction of the vehicle can be changed by a smaller force compared with the case of non-provision of the left and right window portions. Thus, the maneuverability during the turning can be made light.

Returning to Fig. 7, the left and right front direction indicators 33L, 33R are attached to the left and right upper side cowls 25L, 25R, respectively. The running-air flowing along the doglegged portions 57L, 57R each shaped like a dogleg can be made further turbulent by the direction indicators (the front direction indicators 33L, 33R). Thus, the maneuverability during the turning can be made further light.

A second embodiment of the present invention is next described with reference to the drawings.

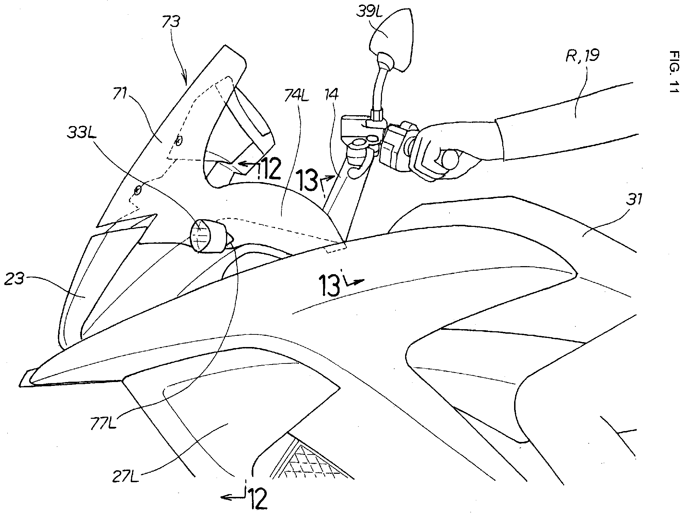

As illustrated in Fig. 11, a screen 73 is installed above the headlight 23. The screen 73 includes a main screen portion 71 and left and right sub-screen portions 72L, 72R (only reference numeral 72L on the front side in the figure is shown). The main screen portion 71 has a surface facing in the longitudinal direction of the vehicle. The left and right sub-screen portions 72L, 72R extend leftward and rightward, respectively, and each having a surface facing in the vehicle-width direction.

The left and right sub-screen portions 72L, 72R are installed to be in contact with the corresponding vehicle-widthwise outsides of the left and right upper side cowls 25L, 25R, respectively. Left and right front direction indicators 33L, 33R are attached to the left and right upper side cowls 25L, 25R, respectively, from the corresponding outsides of the left and right sub-screen portions 72L, 72R, respectively. Specifically, the direction indicators 33L and 33R are attached to the corresponding lateral surfaces of the upper side cowls 25L and 25R, respectively. The left and right sub-screen portions 72L, 72R are co-fastened to attachment portions 77L, 77R (only reference numeral 77L on the front side in the figure is shown), respectively, of these direction indicators. Therefore, the number of fastening parts can be reduced.

Points largely different from the first embodiment are the formation of the screen and the attachment structure resulting from the modified formation. The others in the second embodiment are not largely different from those in the first embodiment; therefore, their explanations are omitted.

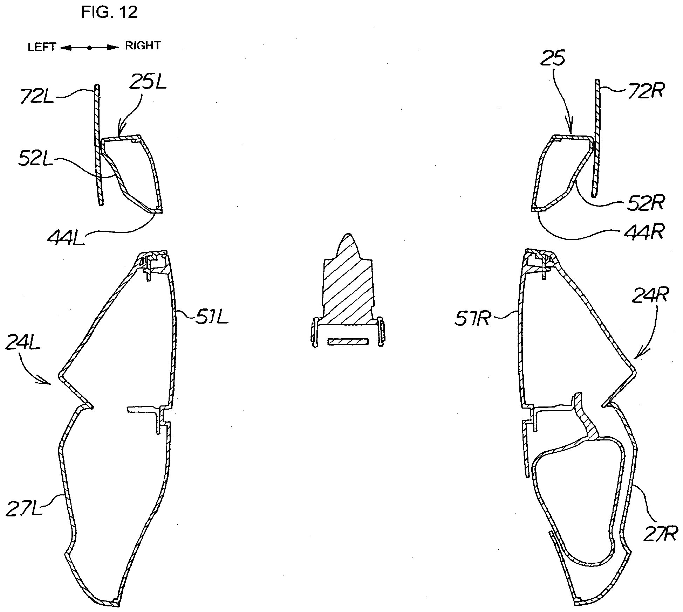

As illustrated in Fig. 12, the left and right sub-screen portions 72L, 72R are arranged in general parallel to the left and right upper side cowls 25L, 25R, respectively.

The left and right sub-screen portions 72L, 72R extending leftward and rightward, respectively, of the main screen portion (reference numeral 71 in Fig. 11) and having the respective surfaces facing in the vehicle-width direction.

The left and right sub-screen portions 72L, 72R are arranged in general parallel to the left and right upper side cowls 25L, 25R, respectively. Therefore, it is possible to block the running-air flowing toward the rider from the lateral portions of the rider. Consequently, a windshield effect for the rider can further be enhanced.

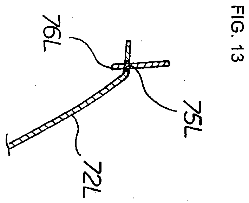

As illustrated in Fig. 13, the left side cover 24L is provided with a recessed portion 75L. The left sub-screen portion 72L is provided with a claw portion 76L inserted into the recessed portion 75L. In short, the rear portion of the left sub-screen portion 72L is secured to the left side cover 24L. Thus, vibration occurring in the left sub-screen portion 72L can be suppressed with a simple structure.

Incidentally, the right sub-screen portion 72R has a structure symmetrical with the left sub-screen portion with respect to the vehicle-widthwise center and the same operation as that of the left sub-screen portion.

Incidentally, the present invention is applied to the motorcycle in the embodiments. However, the present invention can be applied to three-wheeled vehicles. In addition, it is reasonable that the present invention is applied to general straddle-ride type vehicles.

In claim 2, the shape of the rear portion of the upper side cowl may be arranged generally parallel to the vehicle-width direction without rolling back outwardly in the vehicle-width direction.

The present invention is suitable for use in a motorcycle provided with a side cover.

10 ... Straddle-ride type vehicle (Motorcycle), 11 ... Body frame, 23 ... Headlight, 24L, 24R ... Side cover, 25L, 25R ... Upper side cowl, 33L, 33R ... Left and right direction indicators (Left and right front direction indicators), 41L, 41R ... Main body portion, 42L, 42R ... Beaked portion, 44L, 44R ... Window portion, 57L, 57R ... Doglegged portion, 71 ... Main screen portion, 72L, 72R ... Left and right sub-screen portion, 73 ... Screen, 75L, 75R ... Recessed portion, 76L, 76R ... Claw portion.

## Claims

1. A fairing structure for a straddle-ride type vehicle, comprising:
a headlight (23) disposed in front of a body frame (11); and
side covers (24L, 24R) disposed rearward of the headlight (23) and laterally of the body frame (11);
wherein the side covers (24L, 24R) include respective main body portions (41L, 41R) and respective beaked portions (42L, 42R) disposed to extend vehicle-forward from the respective main body portions (41L, 41R) and to extend around the front downside of the headlight (23) and a vehicle-widthwise center, and each shaped like a beak as viewed from the side of the vehicle,
upper side cowls (25L, 25R) are installed above the respective beaked portions (42L, 42R) and rearward of the headlight (23),
a doglegged portion (57L) shaped like a dogleg in section along a height direction is formed between a lower portion of the upper side cowl (25L) and an upper portion of the beaked portion (42L) and a doglegged portion (57R) shaped like a dogleg in section along a height direction is formed between a lower portion of the upper side cowl (25R) and an upper portion of the beaked portion (42R),
and
**characterized in**
**that** the upper side cowls (25L, 25R) are each provided with a respective window portion (44L, 44R) opening laterally of the vehicle, and
direction indicators (33L, 33R) which project outwardly in the vehicle-width direction are attached to corresponding respective lateral surfaces of the upper side cowls (25L, 25R).

2. The fairing structure for a straddle-ride type vehicle according to claim 1,
wherein each of respective rear portions of the upper side cowls (25L, 25R) rolls back vehicle-widthwise outwardly as each of the respective rear portions of the upper side cowls goes rearward of and above the vehicle.

3. The fairing structure for a straddle-ride type vehicle according to anyone of claims 1 to 2,
wherein a screen (73) is disposed above the head light (23), the screen (73) including a main screen portion (71) having a surface facing in the longitudinal direction of the vehicle, and left and right sub-screen portions (72L, 72R) extending leftward and rightward, respectively, of the main screen and each having a surface facing in the vehicle-width direction, and
the left and right sub-screen portions (72L, 72R) are arranged generally parallel to the respective upper side cowls (25L, 25R).

4. The fairing structure for a straddle-ride type vehicle according to claim 3,
wherein direction indicators (33L, 33R) are attached to corresponding respective upper side cowls (25L, 25R) and the left and right sub-screen portions (72L, 72R) are co-fastened to corresponding respective attachment portions of the direction indicators (33L, 33R).

5. The fairing structure for a straddle-ride type vehicle according to claim 3,
wherein the side covers (24L, 24R) are provided with respective recessed portions (75L, 75R), and
the left and right sub-screen portions (72L, 72R) are provided with respective claw portions (76L, 76R) inserted into the corresponding recessed portions (75L, 75R).

## Patentansprüche

1. Verkleidungskonstruktion für ein Fahrzeug vom Grätschsitztyp, aufweisend:
einen Scheinwerfer (23) der vor einem Fahrzeugrahmen (11) angeordnet ist; und
Seitenverkleidungen (24 L, 24 R), die hinter dem Scheinwerfer (23) und seitlich des Fahrzeugrahmens (11) angeordnet sind;
wobei die Seitenabdeckungen (24 L, 24 R) jeweils Hauptkörperabschnitte (41 L, 41 R) und spitze Abschnitte (42 L, 42 R) umfassen, die so angeordnet sind, dass sie sich von dem jeweiligen Hauptkörperabschnitt (41 L, 41 R) zum Fahrzeug nach vorne erstrecken und sich um die Frontunterseite des Scheinwerfers (23) und eine Fahrzeugmitte in Breitenrichtung erstrecken und jeweils wie eine Spitze geformt sind, wenn es von der Seite des Fahrzeugs betrachtet wird,
obere Seitenverkleidungen (25 L, 25 R) die oberhalb des jeweiligen spitzen Abschnitts (42 L, 42 R) und hinter dem Scheinwerfer (23) installiert sind,
einen hundebeinförmigen Abschnitt (57 L), der wie ein Hundebein in Querschnitt geformt ist, entlang einer Höhenrichtung gebildet ist zwischen einem unteren Bereich der oberen Seitenverkleidung (25 L) und einem oberen Bereich des spitzen Bereichs (42 L) und einem hundebeinförmigen Bereich (57 R), der wie ein Hundebein im Querschnitt geformt ist entlang, einer Höhenrichtung gebildet ist zwischen einem unteren Bereich der oberen Seitenverkleidung (25 R) und einem oberen Bereich des spitzen Bereichs (42 R),
**dadurch gekennzeichnet,**
**dass** die obere Seitenverkleidung (25 L, 25 R) jeweils mit einem entsprechenden Fensterabschnitt (44 L, 44 R) versehen ist, die sich seitlich des Fahrzeugs öffnet, und
Richtungsanzeiger (33 L, 33 R) die nach außen in der Fahrzeugbreitenrichtung hervorstehen an entsprechenden seitlichen Flächen der oberen Seitenverkleidungen (25 L, 25 R) befestigt sind.

2. Verkleidungskonstruktion für ein Fahrzeug vom Grätschsitztyp gemäß Anspruch 1,
wobei jeder der jeweiligen hinteren Bereiche der oberen Seitenverkleidungen (25 L, 25 R) sich nach hinten in der Fahrzeugbreitenrichtung nach außen dreht, während jeder der jeweiligen hinteren Bereiche der oberen Seitenverkleidungen nach hinten und über das Fahrzeug hinaus geht.

3. Verkleidungskonstruktion für ein Fahrzeug vom Grätschsitztyp gemäß irgendeinem der Ansprüche 1-2,
wobei eine Scheibe (73) über dem Scheinwerfer (23) angeordnet ist,
wobei die Scheibe (73) einen Hauptscheibenbereich (71), der eine Fläche hat, die in der Längsrichtung des Fahrzeugs orientiert ist, und einen linken und einen rechten Sub-Scheibenbereich (72 L, 72 R) hat, der sich links und rechts jeweils der Hauptscheibe erstreckt, und jedes eine Fläche hat, die in der Fahrzeugbreitenrichtung orientiert ist, und
die linken und rechten Sub-Scheibenbereiche (72 L, 72 R) sich im Wesentlichen parallel zu der jeweiligen oberen Seitenverkleidung (25 L, 25 R) erstrecken.

4. Verkleidungskonstruktion für ein Fahrzeug vom Grätschsitztyp gemäß Anspruch 3,
wobei Richtungsanzeige (33 L, 33 R) an entsprechenden jeweiligen oberen Seitenverkleidungen (25 L, 25 R) befestigt sind und der linke und rechte Sub-Scheibenbereich (72 L, 72 R) mit entsprechenden jeweiligen Befestigungsabschnitten der Richtungsanzeiger (33 L, 33 R) mit befestigt sind.

5. Verkleidungskonstruktion für ein Fahrzeug vom Grätschsitztyp gemäß Anspruch 3,
wobei die Seitenabdeckungen (24 L, 24 R) jeweils mit ausgenommenen Bereichen (75 L, 75 R) versehen sind und der linke und der rechte Sub-Scheibenbereich (72 L, 72 R) jeweils mit Krallenbereichen (76 L, 76 R) versehen sind, die in die entsprechenden ausgenommenen Bereiche (75 L, 75 R) eingeführt sind.

## Revendications

1. Structure de carénage pour un véhicule de type à selle, comprenant :
un phare (23) disposé à l'avant d'une ossature de caisse (11) ; et
des couvercles latéraux (24L, 24R) disposés vers l'arrière du phare (23) et latéralement par rapport à l'ossature de caisse (11) ;
dans laquelle les couvercles latéraux (24L, 24R) comprennent des parties de corps principal (41L, 41R) respectives et des parties en forme de bec (42L, 42R) disposées pour s'étendre vers l'avant du véhicule à partir des parties de corps principal (41L, 41R) respectives et pour s'étendre autour du côté bas avant du phare (23) et un centre dans le sens de la largeur du véhicule, et chacune formée comme un bec lorsqu'elle est observée à partir du côté du véhicule,
des capots latéraux supérieurs (25L, 25R) sont installés au-dessus des parties en forme de bec (42L, 42R) respectives et vers l'arrière du phare (23),
une partie en forme de patte de chien (57L) formée comme une patte de chien en coupe le long d'une direction de hauteur, est formée entre une partie inférieure du capot latéral supérieur (25L) et une partie supérieure de la partie en forme de bec (42L) et une partie en forme de patte de chien (57R) formée comme une patte de chien en coupe le long d'une direction de hauteur est formée entre une partie inférieure du capot latéral supérieur (25R) et une partie supérieure de la partie en forme de bec (42R), et
**caractérisée en ce que** :
les capots latéraux supérieurs (25L, 25R) sont chacun prévus avec une partie de fenêtre (44L, 44R) respective s'ouvrant latéralement par rapport au véhicule, et
des indicateurs de direction (33L, 33R) qui font saillie vers l'extérieur dans le sens de la largeur du véhicule sont fixés sur les surfaces latérales respectives correspondantes des capots latéraux supérieurs (25L, 25R).

2. Structure de carénage pour un véhicule de type à selle selon la revendication 1,
dans laquelle chacune des parties arrière respectives des capots latéraux supérieurs (25L, 25R) roulent dans le sens de la largeur du véhicule vers l'extérieur lorsque chacune des parties arrière respectives des capots latéraux supérieurs va vers l'arrière de et au-dessus du véhicule.

3. Structure de carénage pour un véhicule de type à selle selon l'une quelconque des revendications 1 à 2,
dans laquelle un écran (73) est disposé au-dessus du phare (23), l'écran (73) comprenant une partie d'écran principal (71) ayant une surface orientée dans la direction longitudinale du véhicule et de parties d'écran auxiliaire gauche et droite (72L, 72R) s'étendant vers la gauche et vers la droite respectivement, de l'écran principal et chacune ayant une surface orientée dans le sens de la largeur du véhicule, et
les parties d'écran auxiliaire gauche et droite (72L, 72R) sont agencées généralement parallèlement aux capots latéraux supérieurs (25L, 25R) respectifs.

4. Structure de carénage pour un véhicule de type à selle selon la revendication 3,
dans laquelle des indicateurs de direction (33L, 33R) sont fixés sur les capots latéraux supérieurs (25L, 25R) respectifs correspondants, et les parties d'écran auxiliaire gauche et droite (72L ; 72R) sont co-fixées aux parties de fixation respectives correspondantes des indicateurs de direction (33L, 33R).

5. Structure de carénage pour un véhicule de type à selle selon la revendication 3,
dans laquelle les couvercles latéraux (24L, 24R) sont prévus avec des parties évidées (75L, 75R) respectives, et
les parties d'écran auxiliaire gauche et droite (72L, 72R) sont prévues avec des parties de griffe (76L, 76R) respectives insérées dans les parties évidées (75L, 75R) correspondantes.
